# FASCICULE DE BREVET EUROPEEN

(11) **EP 1 494 104 B1**
(45) Date de publication et mention de la délivrance du brevet: **21.06.2006**
(21) Numéro de dépôt: 04300397.9
(22) Date de dépôt: 25.06.2004
(51) Int. Cl.: G06F 1/00

(54) **Contrôle d'intégrité d'un programme en utilisant des statistiques**
Programmintegritätsprüfung mittels Statistiken
Checking a software integrity by using statistics

(30) Priorité: 26.06.2003 FR 0350258
(43) Date de publication de la demande: 05.01.2005
(73) Titulaire: ST MICROELECTRONICS S.A., 92120 Montrouge (FR)
(72) Inventeur: TEGLIA, Yannick, 13011, MARSEILLE (FR); LIARDET, Pierre-Yvan, 13790, PEYNIER (FR)
(74) Mandataire: de Beaumont, Michel

(56) Documents cités:
- WO-A-01/69356
- NACHENBERG C S: "A NEW TECHNIQUE FOR DETECTING POLYMORPHIC COMPUTER VIRUSES. A THESIS SUBMITTED IN PARTIAL SATISFACTION OF THE REQUIREMENTS FOR THE DEGREE MASTER OF SCIENCE IN COMPUTER SCIENCE AND ENGINEERING" THESIS UNIVERSITY OF CALIFORNIA, XX, XX, 1995, pages I-V,1-127, XP000197628

## Description

La présente invention concerne de façon générale l'exécution de programmes (codes logiciels) par un microprocesseur intégré. L'invention concerne plus particulièrement le contrôle de l'intégrité d'un programme lors de son exécution, afin de vérifier que le programme n'a pas été modifié volontairement ou accidentellement depuis son installation. De telles modifications peuvent provenir de virus informatiques ou de tentatives de piratage consistant, plus particulièrement, en des injections de fautes dans l'exécution de programmes.

Une attaque par injection de fautes, par exemple dite de déroutement, peut consister en l'introduction d'une perturbation sur l'alimentation du processeur pendant un court instant. Une telle attaque provoque un saut inopiné dans la séquence d'exécution du programme. Le plus souvent, une telle attaque apparaît lorsque le programme s'est mis en boucle ou s'est arrêté sur une instruction de blocage suite à un défaut d'authentification, par exemple, dans une application où un processeur doit décider si une opération particulière est autorisée (par exemple, dans le cas de cartes bancaires, d'autorisation d'une transaction bancaire après authentification de l'utilisateur).

Un autre type d'attaque touchant l'exécution d'un algorithme de cryptographie consiste à faire sauter le compteur de programme afin de provoquer un saut inopiné dans la séquence d'exécution, même si le programme n'est pas arrêté en boucle lors d'une authentification. Par exemple, pour des algorithmes de cryptographie (DSA, RSA, DES, AES, etc.), les clés secrètes peuvent être découvertes grâce à un piratage provoquant des sauts d'instructions.

Pour protéger le code logiciel lors de son exécution, on prévoit généralement une vérification périodique de ce code à partir d'une clé d'authentification stockée dans une mémoire ou dans le circuit intégré, par exemple, lors du stockage initial du programme ou de son installation.

Par exemple, on calcule une signature (application d'un algorithme de chiffrement à au moins une partie du code logiciel) lors de l'installation ou de l'écriture du programme. Cette signature est ensuite stockée dans ou hors du circuit intégré exécutant le programme. Puis, lors de l'exécution du code logiciel, le système d'exploitation recalcule une signature sur la base du même algorithme que celui ayant servi à la génération de la signature initiale. On compare alors la signature courante avec la signature prédéterminée. Une divergence entre ces deux signatures signifie que le programme stocké a été modifié et permet donc d'identifier une attaque potentielle involontaire ou accidentelle.

Un exemple d'un tel procédé de vérification d'intégrité est décrit dans le brevet américain n° 5442645.

Un inconvénient des solutions connues est qu'en cas de mise à jour du code logiciel par une version plus récente, il est alors nécessaire de mettre à jour la signature prédéterminée. Une telle mise à jour peut être pénalisante notamment en cas de mise à jour fréquente du système.

Par ailleurs, les mises à jour de programmes interviennent de plus en plus souvent par le biais de réseaux de communication de type Internet, il n'est pas souhaitable de multiplier les calculs de signature à réenregistrer dans le circuit intégré côté utilisateur.

Un autre inconvénient des solutions classiques est que la vérification d'intégrité est statique, c'est-à-dire qu'au début du programme on vérifie si la signature est bien autorisée. Par conséquent, un tel système de protection est en pratique inefficace en cas d'injection de fautes en cours d'exécution du programme.

Le document W00169356 divulgue un dispositif de détection de virus informatique comptant le nombre d'occurence de chaque instruction ou de groupes d'instructions pendant l'exécution du programme au sein d'une machine virtuelle.

La présente invention vise à proposer un procédé de vérification d'intégrité d'un programme en cours d'exécution qui pallie les inconvénients des solutions connues.

L'invention vise notamment à proposer une solution ne nécessitant pas une mise à jour d'une signature à chaque mise à jour du code logiciel à protéger.

L'invention vise également à permettre une vérification dynamique, c'est-à-dire, qui permette de détecter les injections de fautes en cours d'exécution du programme.

Pour atteindre ces objets et d'autres, la présente invention prévoit un procédé de contrôle de l'exécution d'un programme mettant en oeuvre des opérations successives, consistant :
pendant l'exécution du programme, à comparer chaque opération, par rapport à une liste pré-établie, et pour chaque opération contenue de la liste, incrémenter et mémoriser un nombre d'occurrences de cette opération ; et
en fin d'exécution du programme, à comparer le nombre d'occurrences de l'exécution courante du programme pour chaque opération par rapport à des plages de nombres d'occurrences stockées précédemment et affectées à chaque opération.

Selon un mode de réalisation de la présente invention, lesdites plages de valeurs sont déterminées par analyse des écarts statistiques possibles des nombres d'occurrences par rapport à une ou plusieurs exécutions du programme.

Selon un mode de réalisation de la présente invention, les nombres d'occurrences courantes sont stockés dans une table.

Selon un mode de réalisation de la présente invention, la valeur d'incrément est pondérée en fonction de la nature et/ou de la position de l'opération dans le programme.

L'invention prévoit également un processeur d'exécution d'un programme, comportant une zone de stockage d'une table de nombres d'occurrences d'opérations lors de l'exécution d'un programme.

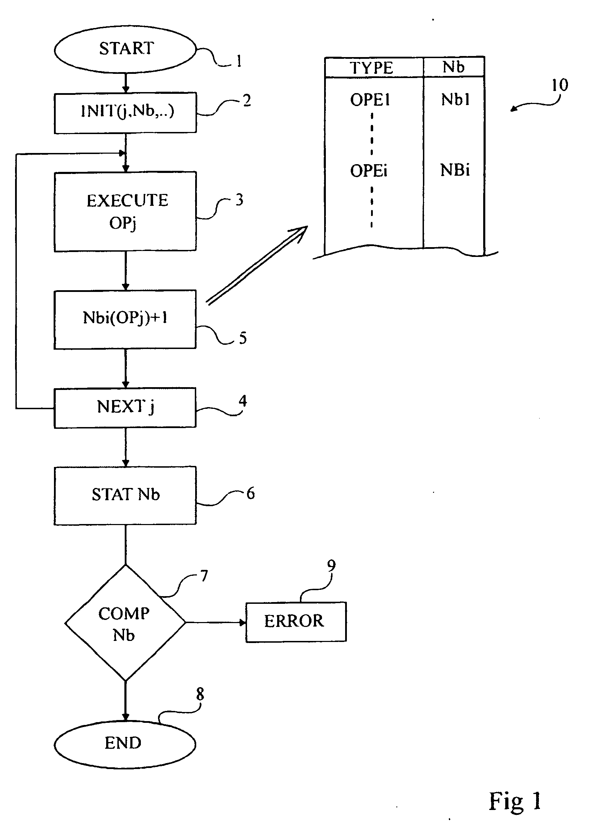

Ces objets, caractéristiques et avantages, ainsi que d'autres de la présente invention seront exposés en détail dans la description suivante de modes de réalisation particuliers faite à titre non-limitatif en relation avec la figure jointe qui illustre, de façon très schématique, un mode de mise en oeuvre de la présente invention.

Par souci de clarté, seuls les éléments et étapes nécessaires à la compréhension de l'invention ont été représentés et seront décrits par la suite. En particulier, les opérateurs ou instructions concernés par la mise en oeuvre de l'invention n'ont pas été détaillés, l'invention s'applique quel que soit le type de l'opérateur. De plus, tous les constituants nécessaires à l'exécution d'un programme, que ce soit au moyen d'une mise en oeuvre logicielle ou au moyen d'une machine d'états en logique câblée, n'ont pas été détaillés, leur réalisation faisant appel à des éléments classiques.

Une caractéristique de la présente invention est de cumuler au cours de l'exécution d'un programme à surveiller, le nombre d'occurrences d'opérateurs, d'instructions ou de groupes d'instructions prédéterminés et de contrôler, en fin d'exécution du programme, que les nombres d'occurrences détectés restent dans une plage de valeurs admises pour considérer que le programme qui vient d'être exécuté est bien authentique.

De préférence, les plages de variations autorisées sont calculées de façon statistique en fonction du type d'opérateur, d'instruction ou du groupe d'opérations concerné. Pour une telle détermination, on tient compte notamment de la fréquence moyenne d'apparition d'une opération donnée dans un programme.

On fera par la suite référence au terme opérateur ou opération pour désigner les éléments du programme dont le nombre d'occurrences est selon l'invention surveillé. Ainsi, une opération peut être un code opératoire, une instruction ou un groupe d'instructions (par exemple, l'accès à une adresse mémoire ou à un registre, que ce soit pour une lecture ou écriture d'une donnée ou pour l'exécution d'un code stocké) et plus généralement tout élément numérique susceptible d'être surveillé par son nombre d'occurrences dans un programme informatique.

Toujours selon un mode de réalisation préféré, une table d'occurrences des opérations à surveiller est calculée et est mémorisée lors d'une ou plusieurs exécutions du programme (par exemple, avec des données aléatoires) dont on déduit des statistiques ou, en variante, lors de sa conception ou de son installation.

La figure annexée illustre, de façon très schématique et sous forme de blocs, un mode de mise en oeuvre du procédé selon l'invention. Cette figure illustre l'exécution d'un programme à surveiller par le procédé de l'invention.

Lors du démarrage d'un programme (bloc 1, START), certains constituants sont classiquement initialisés (par exemple, le compteur programme). Selon l'invention, on profite de cette étape d'initialisation (bloc 2, INIT(j, Nb, ...)) pour initialiser une table d'occurrences 10 mémorisée, à l'intérieur ou à l'extérieur du circuit intégré exécutant le programme. Cette table 10 associe, selon l'invention, à chaque type TYPE d'opération OPEi à surveiller, un nombre Nbi d'occurrences de cette opération lors de l'exécution du programme.

La table d'occurrences, et plus particulièrement les types d'opérations à surveiller, sont selon un mode de mise en oeuvre, définies dans le début du programme exécuté. En variante, pour un outil (circuit intégré) donné, on prédéfinit certaines opérations dont on surveillera le nombre d'occurrences quel que soit le programme qui vient à être exécuté.

De façon classique, l'exécution d'un programme consiste en une exécution successive (bloc 3, EXECUTE OPⱼ) des différentes instructions, opérateurs ou groupes d'instructions jusqu'à la fin du programme. Ainsi, on peut symboliser cette exécution par une boucle dans laquelle on passe à l'exécution de l'opérateur suivant (bloc 4, NEXTj) à chaque fois qu'une opération est terminée.

Selon l'invention, à l'intérieur de la boucle d'exécution, c'est-à-dire juste après l'exécution d'une opération (bloc 3), on met en oeuvre une fonction (bloc 5, Nbᵢ(OPⱼ)+1) d'incrémentation du nombre d'occurrences de l'opération courante dans la table 10.

La mise en oeuvre d'une telle fonction est à la portée de l'homme du métier à partir des indications fonctionnelles données dans la présente description. Il s'agit, de façon simplifiée, d'une simple fonction de recherche d'identité entre l'opération courante et une liste pré-établie de la table 10 et, si l'opération correspond à l'une de la liste, on incrémente dans cette table le compteur du nombre d'occurrences.

Une fois l'exécution du programme terminée, c'est-à-dire lorsqu'il n'y a plus d'opération OPj à traiter, le programme lié à l'application elle-même se termine. On exécute alors une fonction (bloc 6 STAT Nb) propre à un mode de réalisation préféré de l'invention qui consiste à extraire, d'une mémoire de préférence non volatile, d'une interrogation externe par exemple à un serveur de données, etc., une table d'occurrences statistiques prédéterminée.

Puis, on compare (bloc 7, COMP Nb) les nombres d'occurrences courants de la table 10 par rapport à la plage de valeurs admises d'après la table statistique 6.

Si les nombres courants sont compris dans les plages admissibles, le programme se termine (bloc 8, END) de façon normale. Dans le cas contraire, le procédé de l'invention génère un message d'alerte (bloc 9, ERROR).

La table de référence est, par exemple, calculée lors de l'installation du programme ou de sa première exécution de façon à déterminer le nombre d'occurrences des différentes opérations significatives pour la mise en oeuvre de l'invention.

Le fait de collecter des informations statistiques d'occurrences des opérations du programme permet de vérifier, lors des utilisations ultérieures, qu'il n'y a pas d'écart significatif au sens statistique entre les valeurs prédéterminées stockées et les valeurs courantes. Ainsi, si une mise à jour du programme est enregistrée sur le support concerné, il n'y a pas de raison que sa signature statistique soit modifiée. Par contre, si une tentative de piratage par injection de faute se produit ou si une introduction de virus perturbe le fonctionnement du programme, la signature statistique deviendra différente, ce qui permettra de détecter une sorte de probabilité d'erreur. Selon un mode de mise en oeuvre particulier, on peut ne stocker que les statistiques partielles concernant la partie du programme considérée comme étant la plus critique ou la moins sujette à variation.

Selon un autre mode de réalisation, on peut utiliser une pondération temporelle ou de localisation dans le programme des statistiques d'occurrences des opérations dans la mesure où, par exemple en ce qui concerne les virus informatiques, on sait que ces derniers vont modifier en priorité le début du programme dans le but de s'exécuter en premier et laisser ensuite place au programme initial. Dans ce cas, les premiers codes opératoires utilisés se verront affecter un coefficient de pondération plus important pour détecter plus facilement une tentative de fraude.

Pour la sélection des opérations dont on souhaite surveiller le nombre d'occurrences, on peut tenir compte du type d'opération que l'on cherche à surveiller. Par exemple, si le procédé de l'invention est plus particulièrement destiné à détecter la présence d'un virus informatique, on peut chercher à surveiller plus particulièrement les opérations d'écriture en mémoire sachant que c'est ce type d'opérations qu'effectue de façon privilégié un virus informatique.

Le choix des types d'opérations, instructions, groupes d'instructions à vérifier en terme de nombre d'occurrences est à la portée de l'homme du métier en fonction de l'application et du type de programme concerné. Par exemple, on pourra comptabiliser le nombre d'accès en mémoire externe, le nombre de multiplications, le nombre de chargements de tirages aléatoire, etc.

Un avantage de l'invention est qu'en cas de mise à jour du programme, la signature statistique reste la même. En particulier, les opérations constitutives d'un algorithme de type DES (Data Enscription Standard) ne sont pas modifiées d'une version à une autre.

Un autre avantage de l'invention est que la vérification s'effectue en fin d'exécution du programme. Ainsi, les injections de fautes peuvent être détectées.

Bien entendu, la présente invention est susceptible de diverses variantes et modifications qui apparaîtront à l'homme de l'art. En particulier, le nombre et type d'opérations dépend du programme dont on souhaite surveiller l'exécution.

En outre, la tolérance statistique acceptable pour les nombres d'occurrences des opérations surveillées peut correspondre en pratique à la fixation de seuil autour d'une valeur déterminée lors de la première exécution du programme. A cet égard, on notera que la plage de tolérance autour de cette valeur ne sert pas seulement à permettre l'installation de mises à jour sans nécessiter une modification de la table d'occurrences préenregistrée, mais également à tenir compte du fait que certaines opérations peuvent être exécutées un nombre différent de fois d'une exécution à l'autre du logiciel (par exemple, les opérateurs de type nombre de passages dans une boucle qui dépend d'une donnée d'entrée, nombre d'élévations au carré et de multiplications qui dépend de l'exposant de l'exponentiation modulaire (technique dite de "Square-Multiply"), ou nombre d'exécutions d'une fonction élémentaire d'écriture dans une mémoire qui dépend de la taille de la donnée à écrire).

## Revendications

1. Procédé de contrôle de l'exécution d'un programme mettant en oeuvre des opérations successives (OPj), consistant:
pendant l'exécution du programme, à comparer chaque opération (OPj), par rapport à une liste pré-établie (10), et pour chaque opération contenue de la liste (10), incrémenter et mémoriser un nombre d'occurrences (NBi) de cette opération ; et
en fin d'exécution du programme, à comparer le nombre d'occurrences (NBi) de l'exécution courante du programme pour chaque opération (OPEi),
**caractérisé en ce que** la comparaison est effectuée par rapport à des plages de nombres d'occurrences stockées précédemment et affectées à chaque opération, et lesdites plages sont déterminées par analyse des écarts statistiques possibles des nombres d'occurrences (NBi) par rapport à une ou plusieurs exécutions du programme.

2. Procédé selon la revendication 1, dans lequel les nombres d'occurrences courantes sont stockés dans une table (10).

3. Procédé selon la revendication 1, dans lequel la valeur d'incrément est pondérée en fonction de la nature et/ou de la position de l'opération dans le programme.

4. Processeur d'exécution d'un programme, **caractérisé en ce qu'**il comporte une zone de stockage d'une table (10) de nombre d'occurrences d'opérations lors de l'exécution d'un programme, ladite table étant utilisée pour la mise en oeuvre du procédé selon l'une quelconque des revendications 1 à 3.

## Claims

1. A method for controlling the execution of a program implementing successive operations (OPj), consisting of:
during program execution, comparing each operation (OPj) with a pre-established list (10), and for each operation contained in the list (10), incrementing and storing a number of occurrences (NBi) of this operation; and
at the end of the program execution, comparing the number of occurrences (NBi) of the current program execution for each operation (OPEi),
**characterized in that** the comparison is made with previously-stored ranges of numbers of occurrences assigned to each operation, and said ranges of values are determined by analysis of the possible statistical deviations of the numbers of occurrences (NBi) with respect to one or several program executions.

2. The method of claim 1, wherein the numbers of current occurrences are stored in a table (10).

3. The method of claim 1, wherein the increment value is weighted according to the nature and/or the position of the operation in the program.

4. A processor for executing a program, **characterized in that** it comprises an area for storing a table (10) of numbers of operation occurrences upon execution of a program, said table being used for the implementation of the method of any of claims 1 to 3.

## Patentansprüche

1. Verfahren zur Kontrolle der Ausführung eines Programms unter Benutzung bzw. Verarbeitung aufeinanderfolgender sukzessiver Operationen (OPⱼ), das Verfahren bestehend in:
während der Ausführung des Programms Vergleichen jeweils jeder Operation (OPⱼ) mit einer vorbestimmten Liste (10), und für jeweils jede in der Liste (10) enthaltene Operation Inkrementieren und Speichern einer Zahl von Okkurrenzen, d.h. Auftritten bzw. Vorkommen (NBᵢ) dieser Operation, sowie
zum Ende der Ausführung des Programms Vergleichen der Zahl von Okkurrenzen (NBᵢ) der laufenden Programmausführung für jede Operation (OPEᵢ), **dadurch gekennzeichnet, dass** der Vergleich mit zuvor gespeicherten und jeweils jeder Operation zugeordneten bzw. zugewiesenen Bereichen von Okkurrenzzahlen erfolgt, wobei die genannten Bereiche durch Analyse der möglichen statistischen Abweichungen bzw. Abstände der Zahlen von Okkurrenzen (NBᵢ) relativ bezüglich einer oder mehreren Ausführung(en) des Programms bestimmt werden.

2. Verfahren nach Anspruch 1, bei welchem die laufenden Zahlen von Okkurrenzen in einer Tabelle (10) gespeichert werden.

3. Verfahren nach Anspruch 1, bei welchem der Inkre- mentwert in Abhängigkeit von der Natur und/oder von der Stellung der Operation in dem Programm gewichtet wird.

4. Prozessor zur Ausführung eines Programms, **dadurch gekennzeichnet, dass** er eine Zone zur Speicherung einer Tabelle (10) Zahlen von Okkurenzen, d.h. von Auftritten- bzw. des Vorkommens von Operationen bei der Ausführung eines Programms aufweist, wobei die genannte Tabelle für die Ausführung des Verfahrens nach einem der An-sprüche 1 bis 3 verwendet wird.
